# EUROPEAN PATENT SPECIFICATION

(11) **EP 3 300 552 B1**
(45) Date of publication and mention of the grant of the patent: **04.09.2019**
(21) Application number: 15739196.2
(22) Date of filing: 02.07.2015
(51) Int. Cl.: H04W 36/00, H04W 36/14, H04W 36/28

(54) **NETWORK NODE FOR CONNECTION MANAGEMENT AND METHOD THEREOF**
NETZWERKKNOTEN ZUM VERBINDUNGSMANGEMENT AND VERFAHREN DAFÜR
NOEUD DE RÉSEAU DE GESTION DE CONNEXION ET SON PROCÉDÉ

(43) Date of publication of application: 04.04.2018
(73) Proprietor: Huawei Technologies Co., Ltd., Longgang District Shenzhen, Guangdong 518129 (CN)
(72) Inventor: OLOFSSON, Henrik, 16440 Kista (SE)
(74) Representative: Thun, Clemens
(86) International application number: PCT/EP2015/065060
(87) International publication number: WO 2017/001015

(56) References cited:
- EP-A1- 2 104 388
- EP-A1- 2 523 510
- US-A1- 2002 067 707
- US-A1- 2011 306 347
- US-A1- 2013 308 473

## Description

### Technical Field

The present invention relates to network nodes. Furthermore, the present invention also relates to corresponding methods, system, a computer program, and a computer program product.

### Background

In order to create wireless communication systems that are scalable and possible to manage, mobile communication radio networks covering large areas are often divided into smaller coverage areas. In order to manage the mobility of users in this system, the user must be allowed to move between these smaller areas. This can be achieved by assigning a specific downlink identity broadcasted in a certain area and a certain frequency. This is often called a cell. A multitude of cells are used to provide coverage over a larger area. A Base Station (BS) may be configured to handle one or more cells in such systems.

The mobility in these systems, such as Long Term Evolution (LTE), is achieved by configuring Mobile Station (MS) to measure and report detected cells, i.e. cell identities, and a metric identifying the quality of the connection, e.g. signal strength or signal quality. This is achieved by measuring a downlink reference signal.

The decisions for mobility are made by the radio network and communicated by the BS to the MS. It should however be noted that depending on the system architecture, the decision can be made in the BS (also referred to as access node) like e.g. in LTE, or the decision can be made in a Base Station Controller (BSC) which is a node handling multiple BSs, like e.g. the Radio Network Controller (RNC) in Universal Terrestrial Radio Access Network (UTRAN), handling multiple NodeB.

When moving between different Radio Access Technologies (RAT), one way to achieve this is to let the MS measure the target RAT according to the principles used in the target RAT. This requires that the MS is capable of measuring the target RAT, which is of course anyway needed in order to manage the connection established in the target RAT after a handover.

Hard handover, where the MS is only connected to one BS at a time, is used in 2G cellular wireless system Global System for Mobile Communications (GSM) and 4G cellular wireless system Long-Term Evolution (LTE) and between different RATs.

There are however different schemes for connection management between one or more BSs and a MS. Systems like 3G cellular wireless system UTRAN use a soft handover (also called macro diversity) where the MS is connected to more than one BS and where the same information is sent to/from all participating BSs. In LTE, there is a scheme called dual connectivity (DC) or Multi Stream Aggregation (MSA) where the MS is connected to more than one BS and where different information is sent to/from the different BSs. The common denominator for all these is that there is a need to handle the connection, i.e. to decide when to add/remove/modify a connection between an MS and a BS.

For example, US 2011/0306347 A1 refers to a communication method of a macro base station serving a target mobile terminal in a macrocell including a picocell includes receiving information about an uplink interference of a pico base station in the picocell from the pico base station, and determining whether to perform a handover of the target mobile terminal to the pico base station based on an uplink interference of the macro base station and an uplink interference of the pico base station.

Further, US 2002/0067707 A1 refers to a wireless communications network including a first base station system that performs wireless communications according to a first protocol (e.g., 1xEV-DO protocol) and a second base station system that performs wireless communications according to a second, different protocol (e.g., IS-2000). A link is provided between the first and second base station systems to enable a network-initiated handoff procedure. If a source base station system detects that a handoff of a mobile station to a target base station system is required, the source base station system exchanges messaging over the link with the target base station system to perform the handoff. In one example, the handoff is a hard handoff.

Further, EP 2 523 510 A1 refers to an optimal transmit power control on each of a periodic SRS and an aperiodic SRS. In a radio communication system in which a mobile station apparatus transmits a first reference signal or a second reference signal to a base station apparatus, the base station apparatus notifies the mobile station apparatus of a first parameter used for setting of a transmit power for transmission of the first reference signal, and a second parameter used for setting of a transmit power for transmission of the second reference signal, and the mobile station apparatus sets the transmit power for transmission of the first reference signal using the first parameter, while setting the transmit power for transmission of the second reference signal using the second parameter.

### Summary

An objective of embodiments of the present invention is to provide a solution which mitigates or solves the drawbacks and problems of conventional solutions.

Another objective of embodiments of the present invention is to provide an improved solution for inter-RAT connection handling for user devices.

An "or" in this description and the corresponding claims is to be understood as a mathematical OR which covers "and" and "or", and is not to be understood as an XOR (exclusive OR).

The above objectives and further objectives are solved by the subject matter of the independent claims. Further advantageous implementation forms of the present invention can be found in the dependent claims.

According to a first aspect a first network node for a wireless communication system is provided, the first network node being configured to operate in a first Radio Access Technique, RAT, and the first network node comprising:
- a processor configured to:
   ∘ receive a radio resource request ,RRR, for a reference signal ,RS, to be transmitted by a user device,
   ∘ determine that the user device is served by a second network node configured to operate in a second RAT
   ∘ allocate a radio resource for the reference signal, RS;
- a transceiver configured to:
   ∘ transmit a first control signal,CS1, to the user device, the first control signal,CS1, indicating the allocated radio resource,
   ∘ receive a reference signal, RS, via the allocated radio resource from the user device,
- wherein the processor is configured to measure the reference signal, RS,
- wherein in a first alternative:
   ∘ the processor is configured to make a first connection handling decision for the user device based on the measurement of the reference signal, RS,
   ∘ the transceiver is configured to transmit a second control signal,CS2, to the second network node, the second control signal,CS2, indicating the first connection handling decision, and
   ∘ the processor is configured to execute connection handling for the user device according to the first connection handling decision,
- wherein in a second alternative instead of the first alternative:
   ∘ the transceiver is configured to forward the measurement of the reference signal, RS, to the second network node,
   ∘ wherein the transceiver is configured to receive a third control signal, CS3, from the second network node, the third control signal indicating a second connection handling decision for the user device, and
   ∘ the processor is configured to execute connection handling for the user device according to the second connection handling decision.

The radio resource request may be transmitted by a second network node or by the user device, e.g. in the uplink in a cellular system.

The first network node of the first aspect provides a number of advantages over conventional solutions. An advantage of allocating the radio resource for the reference signal in the first RAT (target RAT) is that the first RAT can allocate the radio resource in a unique way to allow the first network node, when receiving a reference signal also determining which user device that transmitted the reference signal. Otherwise, it will be impossible for the first RAT to understand which user device each measured reference signals belongs to. Thereby, inter-RAT connection handling for the user device is possible.

Another advantage is that the first network node of the first aspect makes possible to achieve inter-RAT connection handling for user devices served by a legacy system (such as LTE) where connection handling is based on measurement with DL channels, to another system, where connection handling is based on measurements on UL channels. One advantage of basing the connection handling on (UL) reference signals from the user device to the first network node and thereby reducing the frequency of the downlink reference signal is that it may be possible to achieve reductions in energy consumption both in the network nodes of the wireless communication system, since they do not have to actively transmit regularly; and in the user device, since the user device can transmit a short burst instead of continuously listening and trying to detect transmissions from neighbour network nodes.

A further advantage is that by making the connection handling decision in the first network node (target network node) which has most information about the resource situation in the target node, improved decisions can be made for the user device.

A further advantage is that the connection handling decision made in the first network node is sent to the second network node which can execute the decision or be informed about the decision in order to support a coherent handling of the user device between the network nodes. Further, it is preferred that the second network node informs the user device about the connection handling decision made by the first network node since the second network node serves the user device.

A further advantage is that a supporting of decisions in the second network node (source network node). The benefit of making the decision in the second network node is that the second network node has most information available regarding the user device. The benefit of making the decisions in both the first and the second network nodes is to combine the knowledge in both network nodes, and possibly making decisions in different domains. For example, let the second network node decide when to add a connection, but let the first network node decide the detailed connection parameters. It is also possible that the initial decision may trigger a decision for another connection, e.g. one network node decides to add one connection may trigger a decision in the other network node to release or modify an existing connection.

A further advantage is that the second network node serving the user device has most information available regarding the user device. Thereby, improved connection handling decisions can be made for the user device.

A further advantage is that the first network node can execute the connection handling decision in order to provide a coherent handling of the connections between the user device and the involved network nodes.

In a first possible implementation form of the first network node according to the first aspect, the processor further is configured to
update the allocated radio resource based on the first connection handling decision or the second connection handling decision;
wherein the transceiver further is configured to
transmit an updated first control signal indicating an updated allocated radio resource to the user device.

An advantage with the first possible implementation form is that the first network node can inform the user device in order to provide a coherent handling of the connections between the user device and involved network nodes.

In a second aspect a method in a first network node for a wireless communication system is provided, the first network node being configured to operate in a first Radio Access Technique, RAT, the method comprising:
- receiving a radio resource request, RRR, for a reference signal, RS, to be transmitted by a user device,
- determining that the user device is served by a second network node configured to operate in a second RAT,
- allocating a radio resource for the reference signal, RS,
- transmitting a first control signal,CS1, to the user device, the first control signal, CS1, indicating the allocated radio resource,
- receiving a reference signal, RS, via the allocated radio resource from the user device,
- measuring the reference signal, RS,
- wherein in a first alternative, the method further comprises:
   ∘ making a first connection handling decision for the user device based on the measurement of the reference signal, RS,
   ∘ transmitting a second control signal,CS2, to the second network node, the second control signal,CS2, indicating the first connection handling decision, and
   ∘ executing connection handling for the user device according to the first connection handling decision,
- wherein in a second alternative instead of the first alternative the method further comprises:
   ∘ forwarding the measurement of the reference signal, RS, to the second network node,
   ∘ receiving a third control signal, CS3, from the second network node, the third control signal indicating a second connection handling decision for the user device, and
   ∘ executing connection handling for the user device according to the second connection handling decision.

The first network node of the first aspect provides a number of advantages over conventional solutions. An advantage is that by making the decision in the second network node is that the second network node serving the user device has best information available regarding the user device. Thereby, improved connection handling decisions can be made for the user device.

In a third aspect a computer program with a program code for performing a method according to the second aspect is provided when the computer program runs on a computer.

Further applications and advantages of the present invention will be apparent from the following detailed description.

### Brief Description of the Drawings

The appended drawings are intended to clarify and explain different embodiments of the present invention, in which:
- Fig. 1 shows a first network node according to an embodiment of the present invention;
- Fig. 2 shows a method according to an embodiment of the present invention;
- Fig. 3 shows a second network node according to an embodiment of the present invention;
- Fig. 4 shows a method according to an embodiment of the present invention;
- Fig. 5 shows a further embodiment of the present invention;
- Fig. 6 shows a wireless communication system according to an embodiment of the present invention; and
- Figs. 7-12 show further exemplary embodiments of the present invention.

### Detailed Description

According to the present invention, the mobility or connection handling is not based on measurement on downlink (DL) channels, but rather based on measurement on uplink (UL) channels. This however means that the defined methods for mobility or connection handling according to conventional techniques cannot directly be re-used when handing over from a DL based mobility scheme to an UL based scheme. For instance, inter-RAT mobility from 3GPP systems based on DL measurements, and reported by the user device (UD) to the network is not an optimal solution.

Assuming wireless communication systems use a different scheme for reference signals, e.g. where the UL reference signal is transmitted more often and the DL reference signal is transmitted more seldom, the existing methods for mobility between different RATs and connection handling in general would require the use of a more frequent DL reference signal, which may not be needed for other purposes. Instead, it has been realised by the inventor that a method where UL measurements are used for inter-RAT connection handling is beneficial. But this requires new schemes for connection handling.

Therefore, embodiments of the present invention relates to a first network node, a second network node and a wireless communication system. Embodiments of the present invention also relates to corresponding methods thereof.

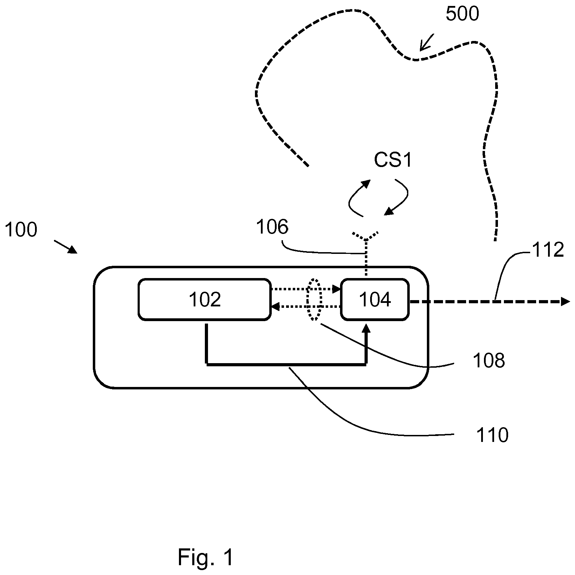

Fig. 1 shows a first network node 100 according to an embodiment of the present invention. The first network node 100 comprises a processor 102 which is communicably coupled with communication means 108 to a transceiver 104. The communication means 108 are illustrated as dotted arrows between the processor 102 and the transceiver 104 in Fig. 1. The communication means 108 are according to techniques well known in the art. The communication means 108 may e.g. be used for transfer of data or signalling between the processor 102 and the transceiver 104. The first network node 100 in this particular embodiment further comprises control means 110 by which the processor 102 operates (or controls) the transceiver 104. The control means are illustrated with the arrow from the processor 102 to the transceiver 104. The first network node 100 also comprises antenna means 106 coupled to the transceiver 104 for reception (and possibly transmission) in the wireless communication system 500. The first network node 100 may also have wired communication means 112 so that the first network node 100 e.g. can communication with other network nodes or control nodes of the wireless communication means over the wired communication means 112.

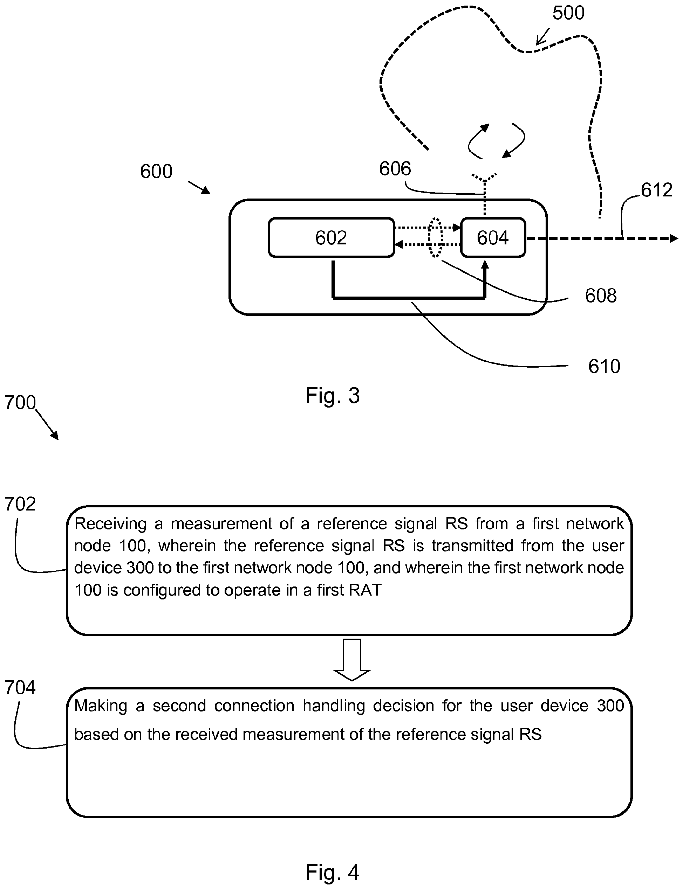

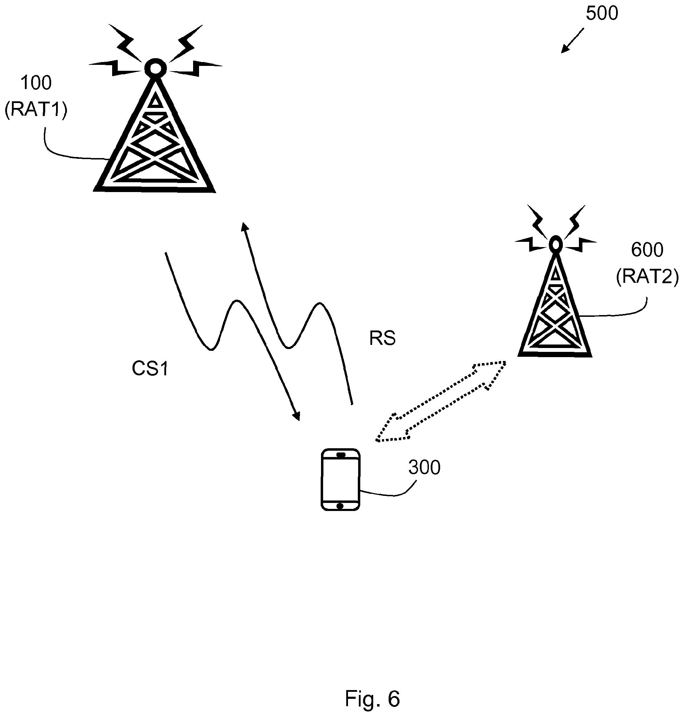

According to the present solution, the processor 102 is configured to receive a radio resource request for a Reference Signal (RS) to be transmitted by a user device 300 (see Fig. 6). The RS can e.g. be transmitted in the UL by the user device 300. The processor 102 is further configured to determine that the user device 300 is served by a second network node 600 (see Fig. 3) which is configured to operate in a second RAT different from the first RAT. The processor 102 is further configured to allocate or configure a radio resource for the RS. The allocation of radio resource is forwarded to the transceiver 104 which is configured to transmit a first control signal (CS1) to the user device 300, and the first control signal (CS1) indicates the allocated radio resource. The transceiver 104 is further configured to receive a RS via or on the allocated radio resource from the user device 300. Hence, the user device 300 transmits the RS in the allocated radio resource. Finally, the processor 102 is configured to measure the received RS from the user device 300.

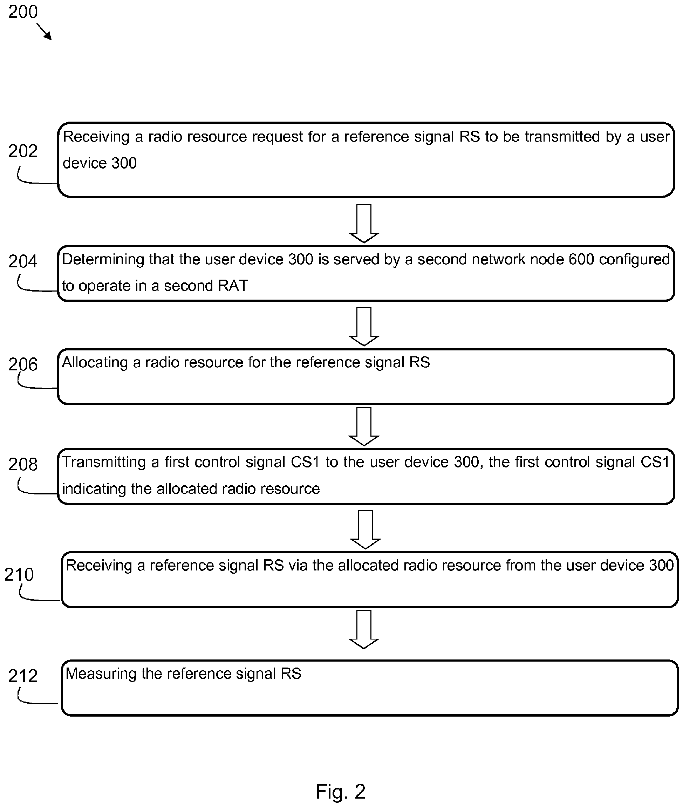

Fig. 2 shows a corresponding method 200. The method 200 may be executed in a first network node, such as the one shown in Fig. 1. The method 200 comprises the step 202 of receiving a radio resource request for a RS to be transmitted by a user device 300. The method 200 further comprises the step 204 of determining that the user device 300 is served by a second network node 600 configured to operate in a second RAT. The method 200 further comprises the step 206 of allocating a radio resource for the RS. The method 200 further comprises the step 208 of transmitting a first control signal to the user device 300, the first control signal indicating the allocated radio resource. The method 200 further comprises the step 210 of receiving a RS via the allocated radio resource from the user device 300. The method 200 further comprises the step 212 of measuring the RS. It should be noted however that step 204 is not required to occur prior to step 212. In case the resource assignment in step 206 is independent of whether the user device 300 is served by another RAT or not, it is sufficient if 204 occurs after the measurements in step 212.

Fig. 3 shows a second network node 600 according to an embodiment of the present invention. The second network node 600 is configured to operate in a second RAT different from the first RAT and is further configured to serve a user device 300. The second network node 600 comprises a processor 602 which is communicably coupled with communication means 608 to a transceiver 604. The communication means 608 are illustrated as dotted arrows between the processor 602 and the transceiver 604 in Fig. 1. The communication means 608 are according to techniques well known in the art. The coupling means 608 may e.g. be used for transfer of data or signalling between the processor 602 and the transceiver 604. The second network node 600 in this particular embodiment further comprises control means 610 by which the processor 602 operates (or controls) the transceiver 604. The control means 610 are illustrated with the arrow from the processor 602 to the transceiver 604. The second network node 600 also comprises antenna means 606 coupled to the transceiver 604 for reception (and possibly transmission) in the wireless communication system 500. The second network node 600 may also have wired communication means 612 so that the second network node 600 e.g. can communication with other network nodes or control nodes of the wireless communication means over the wired communication means 612.

According to the present solution, the transceiver 604 is configured to receive a measurement of a RS from a first network node 100. The RS has been transmitted from the user device 300 to the first network node 100, and the first network node 100 is configured to operate in a first RAT. The processor 602 is configured to make a second connection handling decision for the user device 300 based on the received measurement of the RS.

Fig. 4 shows a corresponding method 200. The method 200 may be executed in a second network node 600, such as the one shown in Fig. 3. The method 700 comprises the step 702 of receiving a measurement of a RS from a first network node 100 configured to operate in a first RAT. The RS is transmitted from a user device 300 to the first network node 100. The user device 300 is served by the second network node 700. The method further comprise the step 704 of making a second connection handling decision for the user device 300 based on the received measurement of the RS.

The first network node 100 and the second network node 600 may be a (radio) network node 300 or an access node or an access point or a base station, e.g. a Radio Base Station (RBS), which in some networks may be referred to as transmitter, "eNB", "eNodeB", "NodeB" or "B node", depending on the technology and terminology used. The radio network nodes may be of different classes such as e.g. macro eNodeB, home eNodeB or pico base station, based on transmission power and thereby also cell size. The radio network node can be a Station (STA), which is any device that contains an IEEE 802.11-conformant Media Access Control (MAC) and Physical Layer (PHY) interface to the Wireless Medium (WM).

The target RAT (RAT1 associated with the first network node 100) determines a resource allocation or configuration (e.g. the time pattern, radio resources, and an identity) of an UL Reference Signal (URS) for the user device 300 and sends this allocation or configuration to the user device 300, either directly or through the source RAT (RAT2 associated with the second network node 600). The radio resource request can be sent from the second network node 600 or the user device 300 to the first network node. The radio resource request is described more in the following disclosure.

Measurements on the URS are performed by the first network node 100. The benefit from using the URS rather than a downlink reference signal is that there is no need for additional DL reference signals to support inter-RAT connection handling. Adding an additional RS for this purpose would reduce the available capacity in the cell served by the first network node 100.

The connection handling decision may for example be to add a connection between the user device 300 and the network node when the signal quality exceeds a threshold, or where the signal quality is measured by comparing the received signal power of a reference signal compared to the total received power (interference), or by removing a connection if the signal quality is lower than a threshold. Similarly, the decision can be made based on received signal power. The benefit of using signal quality is that this takes the interference of the uplink into account, whereas the benefit of using received signal power is that reflects the signal propagation in both uplink and downlink.

Therefore, the present solution provides means for performing inter-RAT connection handling. With connection handling we mean actions related to managing the connection(s) between the user device 300 and one or more network nodes, including such functionality as adding, removing or modifying a connection between one user device 300 and one network node. Typical examples of connection handling are:
- Hard handover: at the same time adding one connection to a first network node 100, and removing another connection to the second network node 600.
- Soft handover: adding or removing connections to one or more network nodes.
- Multi stream aggregation: adding or removing connections to one or more network nodes where the difference compared to soft handover is that the information sent to/from different network nodes may be different.

Connection handling may also be used to modify existing connections to adjust the parameters used for transmission of information, e.g. change radio resource parameters assigned to control channels. One example of this is that different URS may be used by the user device 300 depending on the distance between the user device 300 and the first network node 100. It is also possible to modify the connection in a similar manner such that if the measurement is above or below a threshold, the connection can be modified, e.g. by using a lower power for the URS if the user device 300 is located close to the network node.

The general scheme for connection handling is that that a network node receives measurements, makes a decision, execute the decision, and inform the user device 300 so that the user device 300 can be configured accordingly.

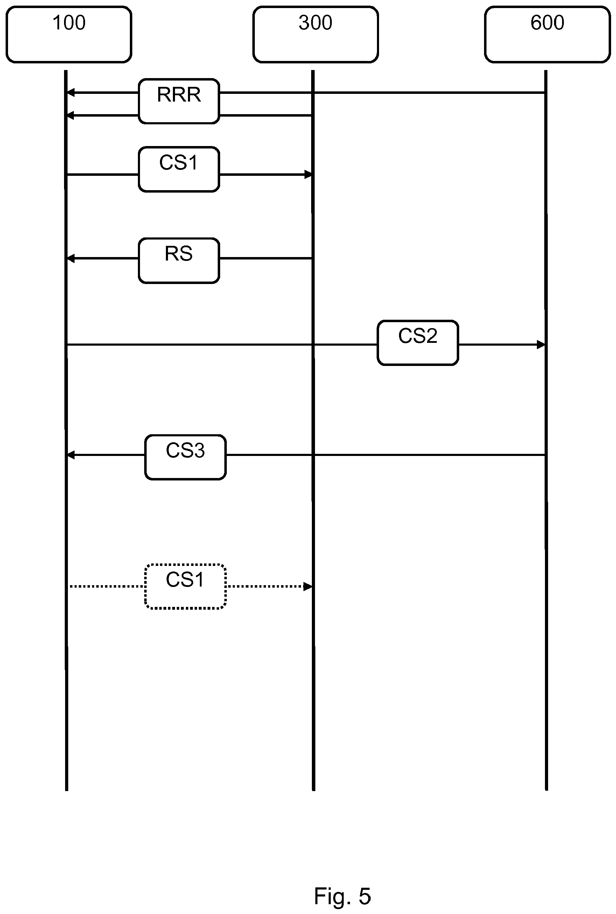

Fig. 5 illustrates signalling aspects of further embodiments of the present invention. The first network node 100 receives a radio resource request RRR from the user device 300 or from the second network node 600. In response to the RRR the first network node 100 transmits the first control signal CS1 to the user device 300. The user device 300 in response to reception of the first control signal CS1 transmits a reference signal RS via or on the radio resource allocation indicated in the received CS1.

With further reference to Fig. 5 in an embodiment of the present invention, the first network node 100 transmits a second control signal (CS2) to the second network node 600. The second control signal SC2 indicates a first connection handling decision made by the first network node 100.

With further reference to Fig. 5 in an embodiment of the present invention, the first network node 100 receives a third control signal (CS3) from the second network node 600. The third control signal indicates a second connection handling decision for the user device 300 made by the second network node 600.

With further reference to Fig. 5 in an embodiment of the present invention, the first network node 100 updates the allocated radio resource based on the first connection handling decision or the second connection handling decision. The first network node 100 thereafter transmits an updated first control signal CS1 indicating an updated allocated radio resource to the user device 300. This is illustrated with the dotted box and arrow.

Fig. 6 shows a wireless communication system according to an embodiment of the present invention. It is shown how the first network node 100 of the first RAT transmits a first control signal CS1 to the user device 300. The first control signal CS1 indicates the radio resource allocation/configuration for a reference signal RS. The user device 300 derives the allocation and transmits the reference signal RS in the UL in the allocated radio resource. It is also illustrated with the dotted two way arrow that the second network node 600 of the second RAT serves the user device 300 during the described procedure.

In the following disclosure further exemplary embodiments of the present invention are illustrated and described. In the following embodiments, the following set of building blocks for information exchange to and from the first network node 100 are used. The first network node 100 is in the following a target network node belonging to a target first RAT (RAT1). The second network node 600 is a source network node belonging to a source second RAT (RAT2).

URS resource request (corresponding to the RRR described above): this is a request for URS resources sent to the first network node 100 and may include capabilities of the user device 300, information about currently ongoing services, and information about current radio characteristics (e.g. neighbour ells, velocity, etc.), and transmission configuration (e.g. MIMO, DRX/DTX, etc.). The allocation of radio resource for the URS may be based on this information (e.g. measurements, or service information) provided by the user device 300 or by the source RAT via e.g. the second network node 600. The benefit of including this information is that the first RAT can select an URS that is suitable for the user device 300, e.g. an URS that the user device 300 will be able to use (e.g. matching the user device 300 capabilities, and possible to transmit without impacting the QoS of ongoing services), and that will be frequent enough to accurately allow the first network node 100 to track the mobility and channel characteristics of the user device 300 (e.g. depending on the user device velocity). If the first RAT cannot use this additional information when selecting a suitable URS, the first RAT will have to select one based on the worst case, e.g. assume highest mobility, which will lead to a higher resource usage, both over the air and in the network node receiver. A further benefit of including this information is that the target first RAT can select an URS that is suitable for the user device 300, e.g. an URS that the user device 300 will be able to use (e.g. matching the user device capabilities, and possible to transmit without impacting the Quality of Service (QoS) of ongoing services), and that will be frequent enough to accurately allow the first network node 100 to track the mobility and channel characteristics of the user device 300, e.g. depending on the user device 300 velocity. If the first RAT is not able to select a suitable URS, it will have to select one based on the worst case, e.g. assume highest mobility, which will lead to a higher resource usage, both over the air and in the network node receiver.

URS resource request Acknowledgment (ACK): this is sent from first network node 100 to the second network node 600. This contains the time pattern, radio resources (e.g. time, frequency, code, power) and possibly an identity to be used by the user device 300 for the URS assigned by the first network node 100. This also enables the transmission from the first network node 100 to the user device 300. The benefit of this is similar as stated above. Note that the second network node 600 may take this into account for Radio Resource Management (RRM) purposes, e.g. this pattern indicates when the user device 300 will transmit the URS and may not be available for UL/DL transmission for the second network node 600. The benefit of taking this into account in the second network node 600 is that the user device 300 will be able to transmit the URS as requested by the first network node 100.

URS configuration: this is similar to URS resource request ACK but sent to a user device 300. The URS configuration enables the end to end transmission from the first network node 100 to the user device 300.

URS measurement configuration: this is a measurement configuration to the first network node 100 indicating the identity or network address of the second network node and possibly what parameters (e.g. thresholds, time-to-trigger, etc.) that should be used in the measurement phase in the first network node 100. The benefit of including this information is that the measurement reports that are sent from the first network node 100 may be reduced, since the second network node 600 can indicate when the reports are important to be transmitted since there is no need to send unnecessary reports increasing overhead.

URS decision configuration: this is similar to the URS measurement configuration but this is used when first network node 100 performs a connection decision. This is a configuration to the first network node 100 indicating the identity or network address of the second network node and possibly what parameters (thresholds, time-to-trigger, etc.) that should be used in the decision (when applicable) in the first network node 100. The benefit of including this information is that the first network node 100 can make better decisions since the second network node 600 who has most information available regarding the user device 300 remains in partial control of the decision by deciding the criteria for the decision.

Measurement report: this report is sent from the first network node 100 to the second network node 600. The measurement report includes the result from the measurement, e.g. a user device 300 identity, the signal strength or the radio quality, and the radio entity identity. With radio entity, we mean the entity for which the signals are reported, which can be a cell, antenna or group of antennas, The benefit these measurements is that the URS can be used for measurement decisions, rather than relying on the normal measurement report from the user device 300 to the second network node 600, and therefore, this is needed to achieve the benefits listed for the overall solution. Therefore, there is no need to send a specific DL reference signal. The benefit of sending this information is to enable decisions in a different network node than the one performing the measurements.

Decision indication: this indication is sent to/from the first network node 100. This includes information about a decision that was made in the network node sending this indication. This may include information about connection handling (addition/removal/modification) and associated parameters so that the network node receiving can perform the actions required for this connection handling decision. It may also include the measurement report. The benefit of including the measurement report is that this gives additional information for the receiving network node regarding the conditions at the time the decision was made and can e.g. be used to partly allocate new parameters for the connection(s) in the receiving network node.

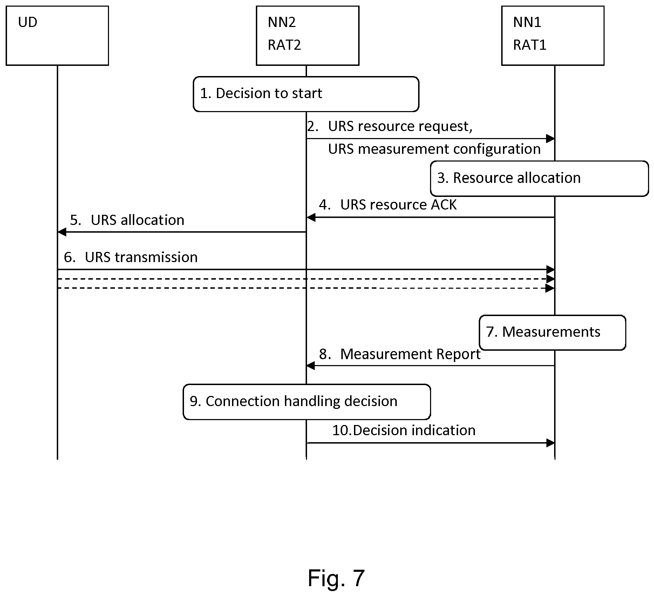

A set of exemplary embodiments are described, where in exemplary embodiments 1-3, the first network node 100 (target network node) provides measurement results to the second network node 600 (source network node) which makes a connection handing decision. After this, the first network node 100 is informed and can make additional connection handing decisions. In exemplary embodiments 4-6, the first network node 100 makes the first decision and sends a decision indication to the second network node 600, which may then make additional handling decisions. Hence a decision may be taken in the first network node 100, the second network node 600 or in both network nodes 100, 600. In Figs. 7-12 the first network node 100 is represented as "NN1" (RAT1 = target RAT), the second network node 600 as "NN2" (RAT2 = source RAT), and the user device 300 as "UD".

In the following embodiments we give examples how the above mentioned information content (such as URS resource request, decision indication, etc.) may be transferred. Note that this is just illustrative examples and that information content may also be split into one or more different messages and sent in a different order.

### Exemplary embodiment 1

In this exemplary embodiment shown in Fig. 7, the principle is that NN2 is the only network node communicating with the UD. The first decision for connection handling is done in the NN2.
1. Decision to start measurement: NN2 decides that it may be appropriate to initiate connection handling for a UD and a network node in the target RAT (RAT1).
2. URS resource reservation request, URS measurement configuration. In this step, NN2 requests resources for the URS from NN1 and also provide a configuration for the measurements. At this point, it is also possible to assign a new identity used for further communication between NN2 and NN1.
3. Resource reservation: NN1, by using the information provided in the previous step, decides on a suitable configuration for the URS.
4. URS resource reservation ACK: NN1 sends the result from the previous step to NN2.
5. URS configuration: NN2 forwards the allocation for the reference signal (RS) to the UD.
6. URS transmission: the UD, using the URS allocation from NN1, transmits the URS which may be detected by NN1.
7. Measurements: NN1 performs measurements on the URS.
8. Measurement report: when the reporting criteria are fulfilled, NN1 sends the measurement report to NN2.
9. Connection handling decision: based on the measurements, NN2 makes a decision whether a connection handling for the UD should be performed.
10. Decision indication: NN2 informs NN1 about the decision so that NN1 can execute the change. NN1 may or may not also perform a subsequent connection handling decision.

### Exemplary embodiment 2

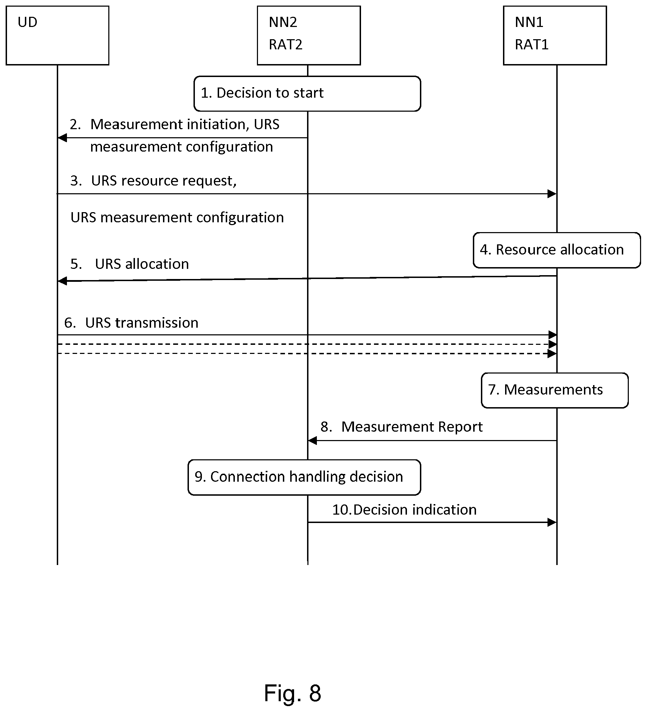

In this embodiment shown in Fig. 8, the principle is that both NN2 and NN1 can communicate with the UD. The first decision for connection handling is done in the NN2.
1. Decision to start measurement: NN1 decides that it may be appropriate to initiate connection handling for a UD and a NN2 in RAT2.
2. Measurement initiation and URS measurement configuration: in this step, NN2 configure the UD for inter-RAT mobility. It includes the measurement configuration to be used by the target RAT (RAT1).
3. URS resource request and URS measurement configuration: in this step, the UD establishes a connection to NN1 and request a configuration for a connection (optional) and for the URS. It also includes the measurement configuration to be used by the target RAT (RAT1).
4. Resource reservation: NN1, by using the information provided in the previous step, decides on a suitable URS configuration.
5. URS configuration: NN1 sends the result from the previous step to the UD.
6. URS transmission: the UD, using the URS configuration from NN1, transmits the URS which may be detected by NN1.
7. Measurements: NN1 performs measurements on the URS.
8. Measurement report: when meeting the reporting criteria, NN1 sends the measurement report to NN2. When sending this report, the information about UD identities used in NN2 is needed to allow NN2 to identify which UD this report is related to. At this point, it is also possible to assign a new identity used for further communication between NN2 and NN1.
9. Connection handling decision: based on the measurements, NN2 makes a decision whether a connection handling should be performed.
10. Decision indication: NN2 informs NN1 about the decision, so that NN1 can execute the change. NN1 may or may not also perform a subsequent connection handling decision.

### Exemplary embodiment 3

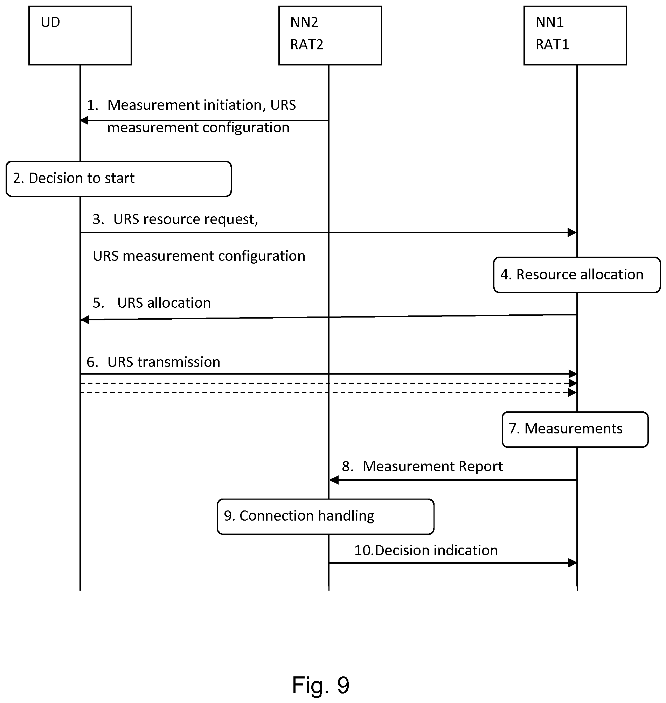

In this embodiment shown in Fig. 9, the UD is configured to autonomously decide when to start sending the URS used for measurements. The principle is that both NN2 and NN1 can communicate with the UD.
1. Measurement initiation and URS measurement configuration: in this step, NN2 configure the UD for inter-RAT connection handling, e.g. including when the UD should start contacting neighbour NN belonging to another RAT. This can be based on geographical location, based on measurements on the source RAT (RAT2) or based on measurements on the target RAT (RAT1). It includes the measurement configuration to be used by the target RAT (RAT1).
2. Decision to start measurement: UD decides that it may be appropriate to initiate connection handling to a target RAT (RAT1).
3. URS resource request and URS measurement configuration: in this step, the UD establishes a connection with NN1 and request a configuration for a connection (optional) and for the URS. It also includes the measurement configuration to be used by the target RAT. Note that in this step may be split into several steps, not necessarily being transmitted at the same time. It may for example be possible for NN1 to request information in a request/response manner from the UD when the information is needed, e.g. starting with the URS resource request and URS measurement configuration and only later, request the UD to provide the connection preparation request.
4. Resource reservation: NN1, by using the information provided in the previous step, decides on a suitable URS configuration.
5. URS configuration: NN1 sends the result from the previous step to the UD.
6. URS transmission: the UD using the URS configuration from NN1 transmits the URS which may be detected by NN1.
7. Measurements: NN1 performs measurements on the URS.
8. Measurement report: when meeting the reporting criteria, NN1 sends the measurement report to NN2. When sending this report, the information about UD identities used in NN2 is needed to allow NN2 to identify which UD this report is related to. At this point, it is also possible to assign a new identity used for further communication between NN2 and NN1.
9. Connection handling decision: based on the measurements NN2 makes a decision whether a connection handling should be performed.
10. Decision indication: NN2 informs NN1 about the decision, so that NN1 can execute the change. NN1 may or may not also perform a subsequent connection handling decision.

### Exemplary embodiment 4

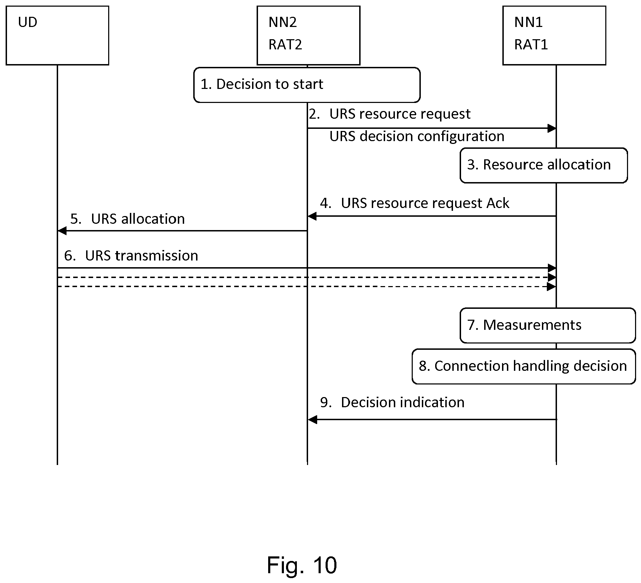

In this embodiment shown in Fig. 10, the principle is that NN2 is the only one communicating with the UD. The first decision for connection handling is done in NN1.
1. Decision to start measurement: NN2 decides that it may be appropriate to initiate connection handling for a UD and a NN in the target RAT (RAT1).
2. URS resource request: in this step NN2 requests resources for the URS from NN1 and also provide a configuration for the decision. At this point, it is also possible to assign a new identity used for further communication between NN2 and NN1.
3. Resource reservation: NN1, by using the information provided in the previous step, decides on a suitable URS configuration.
4. URS resource request ACK: NN1 sends the result from the previous step to NN2.
5. URS configuration: NN2 forwards the URS configuration to the UD.
6. URS transmission: the UD using the URS configuration from NN1 transmits the URS which may be detected by NN1.
7. Measurements: NN1 performs measurements on the URS.
8. Connection handling decision: based on the measurements NN1 makes a decision whether a connection handling should be performed.
9. Decision indication: NN1 informs NN2 about the decision so that NN2 can execute the change. NN2 may or may not also perform a subsequent connection handling decision.

### Exemplary embodiment 5

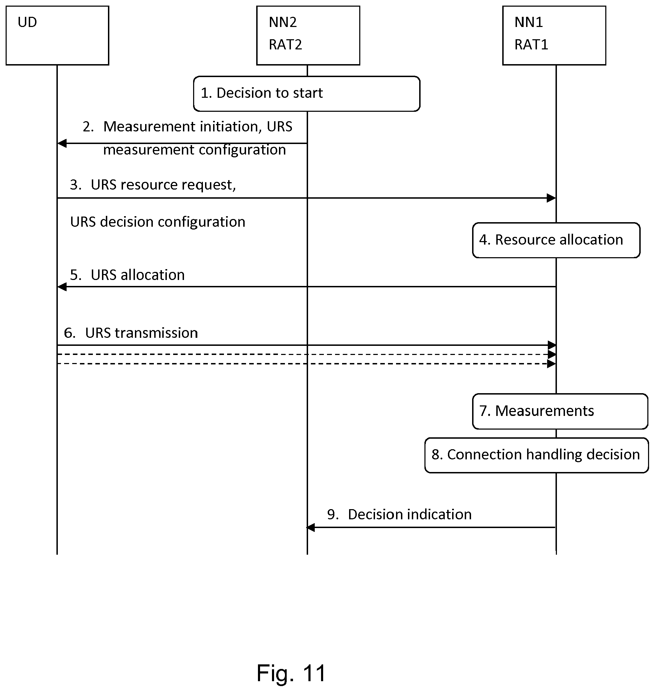

In this embodiment shown in Fig. 11, the principle is that both NN2 and NN1 can communicate with the UD. The first decision for connection handling is done by NN1.
1. Decision to start measurement: NN2 decides that it may be appropriate to initiate connection handling for an UD and a NN in the target RAT (RAT1).
2. Measurement initiation and URS decision configuration: in this step NN2 configure the UD for inter-RAT mobility. It includes the decision configuration to be used by the target RAT (RAT1).
3. URS resource request and URS decision configuration: In this step the UD establishes a connection with NN1 and request a configuration for a connection (optional) and for the URS. It also includes the decision configuration to be used by the target RAT (RAT1).
4. Resource reservation: NN1, by using the information provided in the previous step, decides on a suitable URS configuration.
5. URS configuration: NN1 sends the result from the previous step to the UD.
6. URS Transmission: the UD using the URS configuration from NN1 transmits the URS which may be detected by NN1.
7. Measurements: NN1 performs measurements on the URS.
8. Connection handling decision: based on the measurements NN1 makes a decision whether a connection handling should be performed.
9. Decision indication: NN1 informs NN2 about the decision so that NN2 can execute the change. NN2 may or may not also perform a subsequent connection handling decision.

### Exemplary embodiment 6

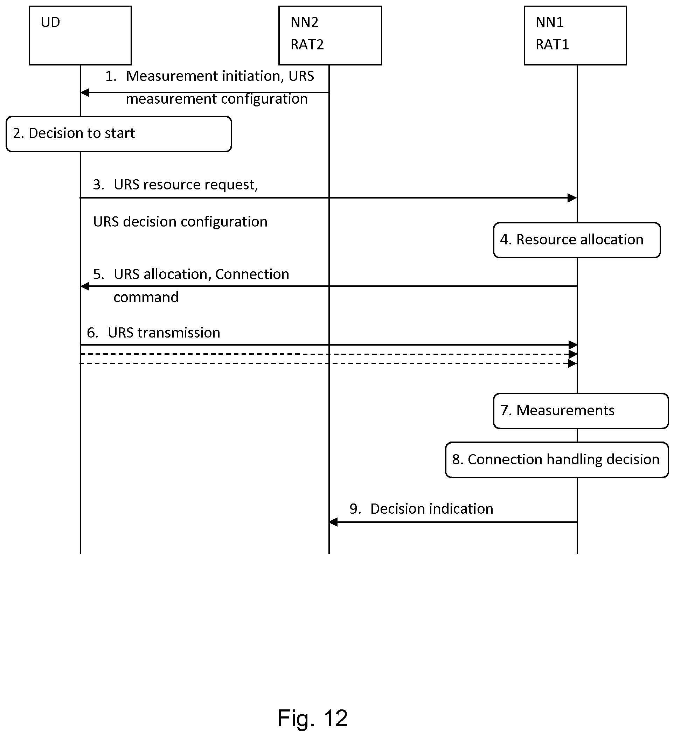

In this embodiment shown in Fig. 12, the principle is that both NN1 and NN2 can communicate with the UD. The first decision for connection handling is done by NN1.
1. Measurement initiation and URS measurement configuration: in this step NN2 configures the UD for inter-RAT mobility, e.g. including when the UD should start contacting neighbour NN(s) belonging to another RAT. This can be based on geographical location, based on measurements on the source RAT (RAT2) or based on measurements on the target RAT (RAT1). It includes the measurement configuration to be used by the target RAT (RAT1).
2. Decision to start measurement: UD decides that it may be appropriate to initiate connection handling to a target RAT (RAT1).
3. URS resource request URS decision configuration: In this step the UD establishes a connection to NN1 and request a configuration for a connection (optional) and for the URS. It also includes the decision configuration to be used by the target RAT (RAT1). Note that this step may be split into several steps, not necessarily being transmitted at the same time. It may for example be possible for NN1 to request information in a request/response manner from the UD when the information is needed, e.g. starting with the URS resource request and URS decision configuration and only later, request the UD to provide the connection preparation request.
4. Resource allocation: NN1, by using the information provided in the previous step, decides on a suitable URS configuration. It may also include parameters needed to configure the communication between the UD and NN1.
5. URS configuration: NN1 sends the result from the previous step to the UD.
6. URS Transmission: the UD using the URS configuration from NN1 transmits the URS which may be detected by NN1.
7. Measurements: NN1 performs measurements on the URS.
8. Connection handling decision: based on the measurements NN2 makes a decision whether a connection handling should be performed.
9. Decision indication: NN1 informs NN2 about the decision so that NN2 can execute the change. NN2 may or may not also perform a subsequent connection handling decision.

The receiver device (UD) 300 discussed in the present disclosure may be a user device, such as a User Equipment (UE), mobile station (MS), wireless terminal or mobile terminal is enabled to communicate wirelessly in a wireless communication system, sometimes also referred to as a cellular radio system. The User Equipment (UE) may further be referred to as mobile telephones, cellular telephones, computer tablets or laptops with wireless capability. The UEs in the present context may be, for example, portable, pocket-storable, hand-held, computer-comprised, or vehicle-mounted mobile devices, enabled to communicate voice or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM).

Furthermore, any method according to the present invention may be implemented in a computer program, having code means, which when run by processing means causes the processing means to execute the steps of the method. The computer program is included in a computer readable medium of a computer program product. The computer readable medium may comprises of essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that the present first network node and second network node comprises the necessary communication capabilities in the form of e.g., functions, means, units, elements, etc., for performing the present solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present solution.

Especially, the processors of the present devices may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the present invention is not limited to the embodiments described above, but also relates to and incorporates all embodiments within the scope of the appended independent claims.

## Claims

1. A first network node (100) for a wireless communication system (500), the first network node (100) being configured to operate in a first Radio Access Technique, RAT, and the first network node (100) comprising:
• a processor (102) configured to:
∘ receive a radio resource request ,RRR, for a reference signal ,RS, to be transmitted by a user device (300),
∘ determine that the user device (300) is served by a second network node (600) configured to operate in a second RAT
∘ allocate a radio resource for the reference signal, RS;
• a transceiver (104) configured to:
∘ transmit a first control signal,CS1, to the user device (300), the first control signal,CS1, indicating the allocated radio resource,
∘ receive a reference signal, RS, via the allocated radio resource from the user device (300),
• wherein the processor (102) is configured to measure the reference signal, RS,
• wherein in a first alternative the first network node (100) further comprises:
∘ the processor (102) configured to make a first connection handling decision for the user device (300) based on the measurement of the reference signal, RS,
∘ the transceiver (104) configured to transmit a second control signal,CS2, to the second network node (600), the second control signal,CS2, indicating the first connection handling decision, and
∘ the processor (102) configured to execute connection handling for the user device (300) according to the first connection handling decision,
• wherein in a second alternative instead of the first alternative, the first network node (100) comprises:
∘ the transceiver (104) configured to forward the measurement of the reference signal, RS, to the second network node (600),
∘ wherein the transceiver (104) is configured to receive a third control signal, CS3, from the second network node (600), the third control signal indicating a second connection handling decision for the user device (300), and
∘ the processor configured to execute connection handling for the user device (300) according to the second connection handling decision.

2. The first network node (100) according to claim 1, wherein the processor (102) further is configured to:
update the allocated radio resource based on the first connection handling decision or the second connection handling decision,
wherein the transceiver (104) further is configured to;
transmit an updated first control signal, CS1, indicating an updated allocated radio resource to the user device (300).

3. Method in a first network node (100) for a wireless communication system (500), the first network node (100) being configured to operate in a first Radio Access Technique, RAT, the method (200) comprising:
• receiving (202) a radio resource request, RRR, for a reference signal, RS, to be transmitted by a user device (300),
• determining (204) that the user device (300) is served by a second network node (600) configured to operate in a second RAT,
• allocating (206) a radio resource for the reference signal, RS,
• transmitting (208) a first control signal,CS1, to the user device (300), the first control signal, CS1, indicating the allocated radio resource,
• receiving (210) a reference signal, RS, via the allocated radio resource from the user device (300),
• measuring (212) the reference signal, RS,
• wherein in a first alternative, the method further comprises:
∘ making a first connection handling decision for the user device (300) based on the measurement of the reference signal, RS,
∘ transmitting a second control signal,CS2, to the second network node (600), the second control signal,CS2, indicating the first connection handling decision, and
∘ executing connection handling for the user device (300) according to the first connection handling decision,
• wherein in a second alternative instead of the first alternative the method further comprises:
∘ forwarding the measurement of the reference signal, RS, to the second network node (600),
∘ receiving a third control signal, CS3, from the second network node (600), the third control signal indicating a second connection handling decision for the user device (300), and
∘ executing connection handling for the user device (300) according to the second connection handling decision.

4. Computer program with a program code for performing a method according to claim 3 when the computer program is executed by a first network node (100).

## Patentansprüche

1. Erster Netzwerkknoten (100) für ein drahtloses Kommunikationssystem (500), wobei der erste Netzwerkknoten (100) konfiguriert ist zum Betrieb in einer ersten Funkzugangstechnik, RAT - *Radio Access Technique,* und der erste Netzwerkknoten (100) Folgendes umfasst:
• einen Prozessor (102), der zu Folgendem konfiguriert ist:
o Empfangen einer Funkressourcenanfrage, RRR - *Radio Resource Request,* für ein Referenzsignal, RS, das durch ein Benutzergerät (300) gesendet werden soll,
o Bestimmen, dass das Benutzergerät (300) durch einen zweiten Netzwerkknoten (600) bedient wird, der zum Betrieb in einer zweiten RAT konfiguriert ist,
o Zuweisen einer Funkressource für das Referenzsignal, RS;
• einen Sendeempfänger (104), der zu Folgendem konfiguriert ist:
o Senden eines ersten Steuersignals, CS1 - *Control Signal,* an das Benutzergerät (300), wobei das erste Steuersignal, CS1, die zugewiesene Funkressource angibt,
o Empfangen eines Referenzsignals, RS, von dem Benutzergerät (300) über die zugewiesene Funkressource,
• wobei der Prozessor (102) konfiguriert ist zum Messen des Referenzsignals, RS,
• wobei der erste Netzwerkknoten (100) in einer ersten Alternative ferner Folgendes umfasst:
o den Prozessor (102), konfiguriert zum Vornehmen einer ersten Verbindungshandhabungsentscheidung für das Benutzergerät (300) basierend auf der Messung des Referenzsignals, RS,
o den Sendeempfänger (104), konfiguriert zum Senden eines zweiten Steuersignals, CS2, an den zweiten Netzwerkknoten (600), wobei das zweite Steuersignal, CS2, die erste Verbindungshandhabungsentscheidung angibt, und
o den Prozessor (102), konfiguriert zum Ausführen einer Verbindungshandhabung für das Benutzergerät (300) entsprechend der ersten Verbindungshandhabungsentscheidung,
• wobei der erste Netzwerkknoten (100) in einer zweiten Alternative anstelle der ersten Alternative Folgendes umfasst:
o den Sendeempfänger (104), konfiguriert zum Weiterleiten der Messung des Referenzsignals, RS, an den zweiten Netzwerkknoten (600),
o wobei der Sendeempfänger (104) konfiguriert ist zum Empfangen eines dritten Steuersignals, CS3, von dem zweiten Netzwerkknoten (600), wobei das dritte Steuersignal eine zweite Verbindungshandhabungsentscheidung für das Benutzergerät (300) angibt, und
o den Prozessor, konfiguriert zum Ausführen einer Verbindungshandhabung für das Benutzergerät (300) entsprechend der zweiten Verbindungshandhabungsentscheidung.

2. Erster Netzwerkknoten (100) nach Anspruch 1, wobei der Prozessor (102) ferner zu Folgendem konfiguriert ist:
Aktualisieren der zugewiesenen Funkressource basierend auf der ersten Verbindungshandhabungsentscheidung oder der zweiten Verbindungshandhabungsentscheidung, wobei der Sendeempfänger (104) ferner zu Folgendem konfiguriert ist:
Senden eines aktualisierten ersten Steuersignals, CS1, welches eine aktualisierte zugewiesene Funkressource für das Benutzergerät (300) angibt.

3. Verfahren in einem ersten Netzwerkknoten (100) für ein drahtloses Kommunikationssystem (500), wobei der erste Netzwerkknoten (100) konfiguriert ist zum Betrieb in einer ersten Funkzugangstechnik, RAT, wobei das Verfahren (200) Folgendes umfasst:
• Empfangen (202) einer Funkressourcenanfrage, RRR, für ein Referenzsignal, RS, das durch ein Benutzergerät (300) gesendet werden soll,
• Bestimmen (204), dass das Benutzergerät (300) durch einen zweiten Netzwerkknoten (600) bedient wird, der zum Betrieb in einer zweiten RAT konfiguriert ist,
• Zuweisen (206) einer Funkressource für das Referenzsignal, RS,
• Senden (208) eines ersten Steuersignals, CS1, an das Benutzergerät (300), wobei das erste Steuersignal, CS1, die zugewiesene Funkressource angibt,
• Empfangen (210) eines Referenzsignals, RS, von dem Benutzergerät (300) über die zugewiesene Funkressource,
• Messen (212) des Referenzsignals, RS,
• wobei das Verfahren in einer ersten Alternative ferner Folgendes umfasst:
o Vornehmen einer ersten Verbindungshandhabungsentscheidung für das Benutzergerät (300) basierend auf der Messung des Referenzsignals, RS,
o Senden eines zweiten Steuersignals, CS2, an den zweiten Netzwerkknoten (600), wobei das zweite Steuersignal, CS2, die erste Verbindungshandhabungsentscheidung angibt, und
o Ausführen einer Verbindungshandhabung für das Benutzergerät (300) entsprechend der ersten Verbindungshandhabungsentscheidung,
• wobei das Verfahren in einer zweiten Alternative anstelle der ersten Alternative ferner Folgendes umfasst:
o Weiterleiten der Messung des Referenzsignals, RS, an den zweiten Netzwerkknoten (600),
o Empfangen eines dritten Steuersignals, CS3, von dem zweiten Netzwerkknoten (600), wobei das dritte Steuersignal eine zweite Verbindungshandhabungsentscheidung für das Benutzergerät (300) angibt, und
o Ausführen einer Verbindungshandhabung für das Benutzergerät (300) entsprechend der zweiten Verbindungshandhabungsentscheidung.

4. Computerprogramm mit einem Programmcode zum Durchführen eines Verfahrens nach Anspruch 3, wenn das Computerprogramm durch einen ersten Netzwerkknoten (100) ausgeführt wird.

## Revendications

1. Premier noeud de réseau (100) pour un système de communication sans fil (500), le premier noeud de réseau (100) étant configuré pour fonctionner selon une première technique d'accès radio (RAT) et le premier noeud de réseau (100) comprenant :
un processeur (102) configuré pour :
recevoir une demande de ressource radio (RRR) pour un signal de référence (RS) devant être émis par un dispositif d'utilisateur (300) ;
déterminer que le dispositif d'utilisateur (300) est desservi par un second noeud de réseau (600) configuré pour fonctionner selon une seconde RAT ;
affecter une ressource radio au signal de référence (RS) ;
un émetteur-récepteur (104) configuré pour :
émettre un premier signal de contrôle (CS1) vers le dispositif d'utilisateur (300), le premier signal de contrôle (CS1) indiquant la ressource radio affectée ;
recevoir un signal de référence (RS) par l'intermédiaire de la ressource radio affectée en provenance du dispositif d'utilisateur (300) ;
le processeur (102) étant configuré pour mesurer le signal de référence (RS) ;
selon une première variante, le premier noeud de réseau (100) comprenant en outre :
le processeur (102) configuré pour prendre une première décision de gestion de connexion pour le dispositif d'utilisateur (300) sur la base de la mesure du signal de référence (RS) ;
l'émetteur-récepteur (104) configuré pour émettre un deuxième signal de contrôle (CS2) vers le second noeud de réseau (600), le deuxième signal de contrôle (CS2) indiquant la première décision de gestion de connexion ; et
le processeur (102) configuré pour exécuter une gestion de connexion pour le dispositif d'utilisateur (300) selon la première décision de gestion de connexion ;
selon une seconde variante à la place de première variante, le premier noeud de réseau (100) comprenant :
l'émetteur-récepteur (104) configuré pour transférer la mesure du signal de référence (RS) au second noeud de réseau (600) ;
l'émetteur-récepteur (104) étant configuré pour recevoir un troisième signal de contrôle (CS3) en provenance du second noeud de réseau (600), le troisième signal de contrôle indiquant une seconde décision de gestion de connexion pour le dispositif d'utilisateur (300) ; et
le processeur configuré pour exécuter une gestion de connexion pour le dispositif d'utilisateur (300) selon la seconde décision de gestion de connexion.

2. Premier noeud de réseau (100) selon la revendication 1, dans lequel le processeur (102) est en outre configuré pour :
mettre à jour la ressource radio affectée sur la base de la première décision de gestion de connexion ou de la seconde décision de gestion de connexion,
l'émetteur-récepteur (104) étant en outre configuré pour :
émettre un premier signal de contrôle (CS1) mis à jour, indiquant une ressource radio affectée mise à jour vers le dispositif d'utilisateur (300).

3. Procédé dans un premier noeud de réseau (100) pour un système de communication sans fil (500), le premier noeud de réseau (100) étant configuré pour fonctionner selon une première technique d'accès radio (RAT) et le procédé (200) consistant à :
recevoir (202) une demande de ressource radio (RRR) pour un signal de référence (RS) devant être émis par un dispositif d'utilisateur (300) ;
déterminer (204) que le dispositif d'utilisateur (300) est desservi par un second noeud de réseau (600) configuré pour fonctionner selon une seconde RAT ;
affecter (206) une ressource radio au signal de référence (RS) ;
émettre (208) un premier signal de contrôle (CS1) vers le dispositif d'utilisateur (300), le premier signal de contrôle (CS1) indiquant la ressource radio affectée ;
recevoir (210) un signal de référence (RS) par l'intermédiaire de la ressource radio affectée en provenance du dispositif d'utilisateur (300) ;
mesurer (212) le signal de référence (RS) ;
selon une première variante, le procédé consistant en outre à :
prendre une première décision de gestion de connexion pour le dispositif d'utilisateur (300) sur la base de la mesure du signal de référence (RS) ;
émettre un deuxième signal de contrôle (CS2) vers le second noeud de réseau (600), le deuxième signal de contrôle (CS2) indiquant la première décision de gestion de connexion ; et
exécuter une gestion de connexion pour le dispositif d'utilisateur (300) selon la première décision de gestion de connexion ;
selon une seconde variante à la place de première variante, le procédé consistant en outre à :
transférer la mesure du signal de référence (RS) au second noeud de réseau (600) ;
recevoir un troisième signal de contrôle (CS3) en provenance du second noeud de réseau (600), le troisième signal de contrôle indiquant une seconde décision de gestion de connexion pour le dispositif d'utilisateur (300) ; et
exécuter une gestion de connexion pour le dispositif d'utilisateur (300) selon la seconde décision de gestion de connexion.

4. Programme informatique comprenant un code de programme permettant, lorsque le programme informatique est exécuté par un premier noeud de réseau (100), de réaliser un procédé selon la revendication 3.
